# EUROPEAN PATENT SPECIFICATION

(11) **EP 4 501 667 B1**
(45) Date of publication and mention of the grant of the patent: **01.04.2026**
(21) Application number: 23774192.1
(22) Date of filing: 11.01.2023
(51) Int. Cl.: B60C 19/00, B60B 30/04, G01M 1/04, B60C 25/00, B60C 25/05, G01M 17/02

(54) **TIRE MOUNTING METHOD AND TIRE PROCESSING METHOD**
REIFENMONTAGEVERFAHREN UND REIFENVERARBEITUNGSVERFAHREN
PROCEDE DE MONTAGE DE PNEUS ET PROCEDE DE TRAITEMENT DE PNEUS

(30) Priority: 25.03.2022 JP 2022050676
(43) Date of publication of application: 05.02.2025
(73) Proprietor: BRIDGESTONE CORPORATION, Chuo-ku Tokyo 104-8340 (JP)
(72) Inventor: YAMANE, Eiichiro, Tokyo 104-8340 (JP)
(74) Representative: Marks & Clerk LLP
(86) International application number: PCT/JP2023/000489
(87) International publication number: WO 2023/181591

(56) References cited:
- JP-A- 2002 005 776
- JP-A- 2003 080 610
- JP-A- 2009 031 034
- JP-A- 2012 181 072
- JP-A- 2015 004 513
- JP-A- 2016 141 053
- JP-A- H1 148 708
- JP-A- H10 160 643
- US-A- 3 375 153
- US-A- 5 259 242
- US-A- 5 466 182

## Description

### TECHNICAL FIELD

This invention relates to a tire mounting method, and a tire processing method. This application claims priority based on Japanese Patent Application No. 2022-050676 filed in Japan on March 25, 2022.

### BACKGROUND

Conventionally, tire measurement, processing, and testing, etc. may be performed with tires mounted on a pair of split rim members (e.g., PTL 1).

US 5 466 182 A relates to a machine for scraping tires and the like comprising means of handling and actuation of a tire made integral with a frame according to a horizontal axis, constituting the axis of rotation of tire and of a work tool, and a device for lifting the tire, one of such means of handling being capable of being operated in rotation but fixed in translation to constitute a fixed zero setting for positioning vertical axis of symmetry of tire, work tool being capable of moving in a horizontal direction parallel to the axis of rotation of the tire so as to achieve the positioning of their vertical axis of symmetry in superposition with axis of symmetry of the said tire in relation to width dimension of tire and to fixed reference.

US 3 375 153 A relates to a machine for reconditioning a worn tire which is held between a pair of parallel disks engaging the beads of the tire and sealing the interior thereof to enable the introduction of a pressure fluid (air) to stiffen the tire for a treatment of its outer surface by cutting and scraping tools.

US 5 259 242 A relates a tire holding fixture comprising upper and lower simulated wheel halves disposed about upper and lower wheel half supports, and a guide disposed coaxially with respect to the wheel half supports. The guide cooperates with the wheel halves and wheel supports so as to center a tire upon the tire holding fixture. The upper wheel half support is designed to be inserted into the lower wheel half support. There are noncontinuous no-lead thread segments disposed about the interior of the lower wheel half support, and about the exterior of the upper wheel half support. These thread segments are designed to be interengagable so as to form a multiple stepped bayonet retention system, capable of holding the wheel supports together. Locking pins are translatable within the wheel half supports so as to allow corotation of the wheel half supports for processing a tire.

### CITATION LIST

### Patent Literature

PTL 1: JP 2009-031034 A

### SUMMARY

### (Technical Problem)

However, in the past, there was a risk of misalignment between the center axis (rotation axis) of the pair of split rim members and the rotation axis of the tire mounted on the pair of split rim members due to the weight of the tire, for example, and this could lead to a loss of precision in tire measurement, processing, and testing, etc.

It is an object of this invention to provide a tire mounting method, and a tire processing method that can control misalignment between the center axis of the pair of split rim members and the rotation axis of the tire mounted on the pair of split rim members, in order to solve the aforementioned problems.

### (Solution to Problem)

According to the invention there is provided a tire mounting method as specified in claim 1.

### (Advantageous Effect)

According to this invention, it is possible to provide a tire mounting method, and a tire processing method that can control misalignment between the center axis of the pair of split rim members and the rotation axis of the tire mounted on the pair of split rim members.

### BRIEF DESCRIPTION OF THE DRAWINGS

In the accompanying drawings:
FIG. 1 is a perspective view schematically illustrating a tire holding device according to one example not claimed;
FIG. 2 is a drawing explaining a clamping step in a tire mounting method according to one embodiment of the present invention;
FIG. 3 is a drawing explaining an approaching step in a tire mounting method according to one embodiment of the present invention;
FIG. 4 is a drawing explaining a rotation step in a tire mounting method according to one embodiment of the present invention; and
FIG. 5 is a drawing explaining a state in which a tire is mounted on the tire holding device after completion of the tire mounting method according to one embodiment of the present invention.

### DETAILED DESCRIPTION

The tire mounting method according to the present invention is suitable, for example, when used for measuring, processing, and/or testing tires. Any pneumatic tire can be used as the tire used in the tire mounting method, and the tire processing method according to the present invention. For example, passenger vehicle pneumatic tires and heavy-duty pneumatic tires can be suitably used. The following is an exemplary description of the tire mounting method, and the tire processing method in accordance with this invention, with reference to the drawings.

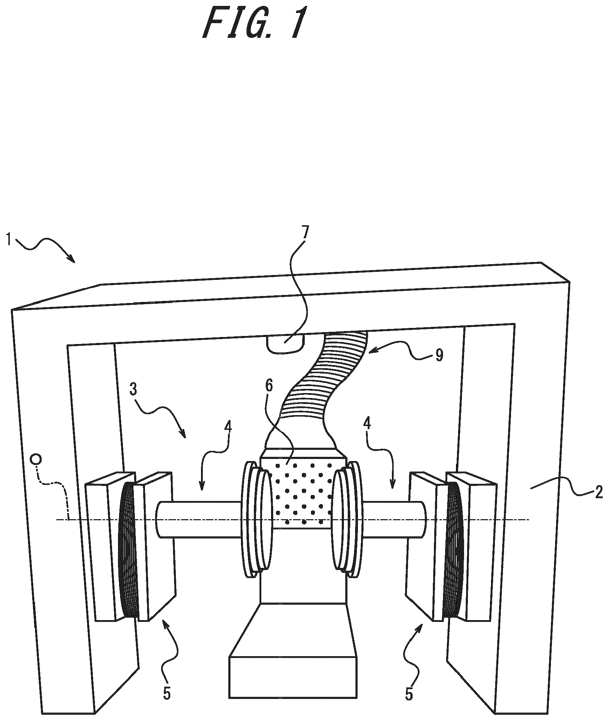

Figure 1 schematically illustrates a tire holding device 1 according to an example not claimed. The tire holding device 1 is configured to hold a tire. Specifically, in the example illustrated in Figure 1, the tire holding device 1 has a holding mechanism section 3 configured to hold the tire. The tire holding device 1 may be configured to allow measuring, processing, and/or testing tires while the tires are held by the holding mechanism section 3. In this example, the tire holding device 1 comprises a measurement section 7, which is configured to measure a tire while the tire is held by the holding mechanism section 3. The measurement section 7 may comprise, for example, an optical sensor. The measurement section 7 may be configured to make any measurement related to the tire, for example, it may be configured to measure the uniformity of the tire. However, the tire holding device 1 does not have to comprise the measurement section 7.

The tire holding device 1 may comprise a processing section, which is configured to process a tire while the tire is held by the holding mechanism section 3. In this embodiment, the tire holding device 1 comprises a buffing section 6 (such as a grinder) configured to buff the tread rubber of the tread portion of the tire while the tire is held by the holding mechanism section 3, and a suction section 9 configured to suck up rubber dust generated by buffing. Accordingly, the tire holding device 1 of the embodiment illustrated in Figure 1 is configured as a buffing device. The buffing section 6 includes, for example, a grinder. The buffing section 6 corresponds to an example of a processing section. However, the processing section may be configured to perform any processing on the tire other than buffing. However, the tire holding device 1 does not need to comprise the buffing section 6 or other processing sections.

The tire holding device 1 may comprise a testing section (not illustrated) configured to test a tire while the tire is held by the holding mechanism section 3. The testing section may be configured to perform any test on the tire, for example, a tire friction test, drainage performance test, wear test, etc. However, the tire holding device 1 does not have to comprise the test section.

Measurement by the measuring section 7, processing (e.g., buffing) by the processing section (e.g., buffing section 6), and/or testing by the testing section are performed after the tire is mounted on the tire holding device 1 (specifically, the holding mechanism section 3). When mounting tires on the tire holding device 1, the tire mounting method of the present invention described below is implemented.

As illustrated in Figure 1, the holding mechanism section 3 comprises a pair of split rim members 4 configured to hold a tire. In the example illustrated in Figure 1, the holding mechanism section 3 further comprises a support frame 2 erected on the floor or ground, etc., and a pair of telescopic parts 5, connected between the support frame 2 and the pair of split rim members 4, and configured to be expandable and contractible. Each of the telescopic parts 5 is telescopic in a direction parallel to the predetermined axis O described below, thereby enabling the respective corresponding split rim member 4 to be displaced with respect to the support frame 2 in a direction parallel to the predetermined axis O. However, each split rim member 4 may be displaced with respect to the support frame 2 in a direction parallel to the predetermined axis O by a different configuration than the telescopic parts 5.

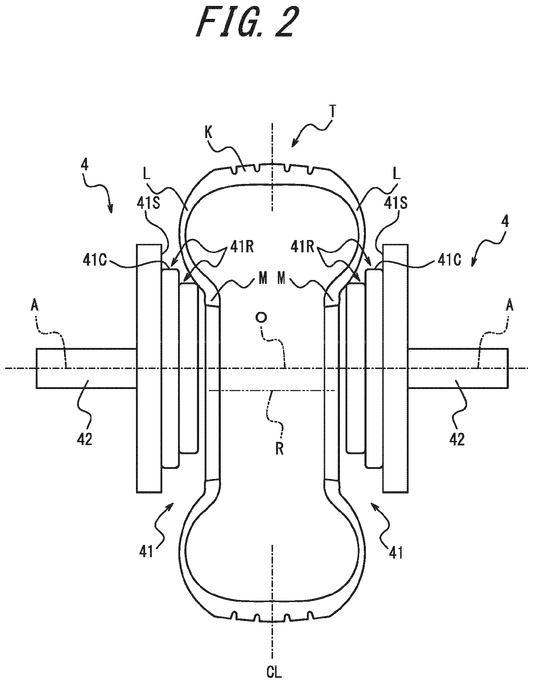

As illustrated schematically in Figure 2, the pair of split rim members 4 has a configuration that, in schematic terms, a rim to which the tire is generally mounted is divided into two parts by cutting it perpendicularly to the center axis (rotation axis) of the rim. The pair of split rim members 4 face each other. The center axis A of each of the pair of split rim members 4 is on a common predetermined axis O. The center axis A of each split rim member 4 corresponds to the rotation axis of each split rim member 4. The pair of split rim members 4 face each other in a direction parallel to the predetermined axis O.

In this embodiment, the predetermined axis O extends in the horizontal direction.

For convenience of explanation, the direction parallel to the predetermined axis O is referred to herein as the "predetermined axial direction". Also, in the predetermined axial direction, the side closer to the space between the pair of split rim members 4 (i.e., closer to the tire equatorial plane CL of the tire T that is placed between the pair of split rim members 4) is referred to as the "inner side in the predetermined axial direction", and in the predetermined axial direction, the side far from the space between the pair of split rim members 4 (i.e., far from the tire equatorial plane CL of the tire T that is placed between the pair of split rim members 4) is called "outer side in the predetermined axial direction. The inner side in the predetermined axial direction corresponds to the inner side in the tire width direction of the tire T that is placed between the pair of split rim members 4, and the outer side in the predetermined axial direction corresponds to the outer side in the tire width direction of the tire T that is placed between the pair of split rim members 4.

As illustrated in Figure 2, the tire T has a pair of bead portions M, a pair of sidewall portions L that are each continuous from the bead portions M to the outer side in the tire radial direction, and a tread portion K between the pair of sidewall portions L.

The pair of split rim members 4 are similar in configuration to each other. In the following, when describing the split rim member(s) 4, it is assumed that each split rim member 4 is explained individually, unless otherwise noted.

As illustrated in Figure 2, the split rim member 4 has a rim-shaped part 41 and a rotary shaft 42 connected to the rim-shaped part 41. The rotary shaft 42 is located on the outer side in the predetermined axial direction relative to the rim-shaped part 41.

The center axis A of the split rim member 4 coincides with the center axis of the rotary shaft 42 and the rim-shaped part 41.

The rim-shaped part 41 has an abbreviated cylindrical outer surface. The rim-shaped part 41 has one or more bead portion holding surfaces 41R configured to hold the bead portion M of the tire T on its outer surface. Each bead portion holding surface 41R comprises a bead seat surface 41C, which is an abbreviated cylindrical surface parallel to the predetermined axial direction, and a rim flange surface 41S, which is an abbreviated vertical surface perpendicular to the predetermined axial direction. The bead seat surface 41C functions to contact the inner side of the bead portion M of the tire T in the tire radial direction and hold the bead portion M in the tire radial direction, similar to the bead sheet of a typical rim. The rim flange surface 41S functions to support the bead portion M of the tire T from the outer side in the tire width direction, similar to the rim flange of a typical rim.

In the embodiment illustrated in Figure 2, the rim-shaped part 41 has two bead portion holding surfaces 41R. When the rim-shaped part 41 has a plurality of bead portion holding surfaces 41R, as in this embodiment, each bead portion holding surface 41R has a different rim diameter. This allows the split rim member 4 to hold multiple types of tires with different rim diameters from each other. In this case, it is preferable that the plurality of bead portion holding surfaces 41R of the rim-shaped part 41 have a larger rim diameter than the bead portion holding surfaces 41R located on the outer side in the predetermined axial direction.

Here, the "rim diameter" of the bead portion holding surface 41R refers to the diameter of the bead portion holding surface 41R at the outer edge of the bead seat surface 41C in the predetermined axial direction.

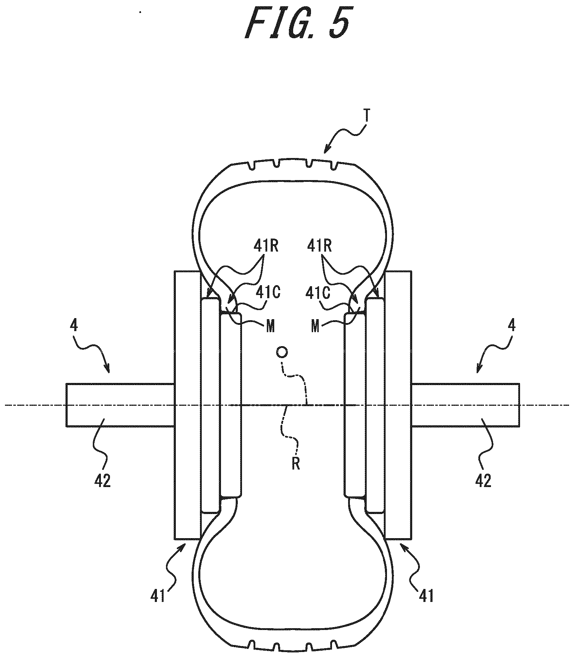

When the tire is mounted on the pair of split rim members 4, the pair of bead portions M of the tire are mounted on the pair of bead portion holding surfaces 41R having the same rim diameter as each other in the pair of split rim members 4, as illustrated in Figure 5.

Here, a tire mounting method according to one embodiment of the present invention will now be described with reference to Figures 2 to 5. The tire mounting method according to this embodiment is a method for mounting a tire T on the tire holding device 1, and is specifically for mounting a pair of bead portions M of the tire T on the pair of bead portion holding surfaces 41R having the same rim diameter as each other in the pair of split rim members 4, as illustrated in Figure 5.

The tire mounting method of this embodiment is preferably performed using the tire holding device 1 described above with reference to Figure 1, but may also be performed using a tire holding device 1 comprising a different configuration than that illustrated in Figure 1.

The tire mounting method of this embodiment, and according to the invention, includes a clamping step, an approaching step, and a rotating step.

First, as illustrated in Figure 2, the tire T is clamped by the pair of split rim members 4 (Clamping step).

More specifically, in the clamping step, the operator or other person places the tire T between the pair of split rim members 4 and places the outer surface of the bead portion M or the sidewall portion L of the tire T, which is above the rotation axis R of the tire T, on the respective rim-shaped parts 41 of the pair of split rim members 4. Thereby, the tire T is positioned between the pair of split rim members 4 and the upper portion of the tire T is held by the pair of split rim members 4, and the portion of the tire T lower than the upper portion is left hanging. At this time, the rotation axis R of the tire T is displaced below the center axis A (and thus the predetermined axis O) of the pair of split rim members 4 due to the weight of the tire T.

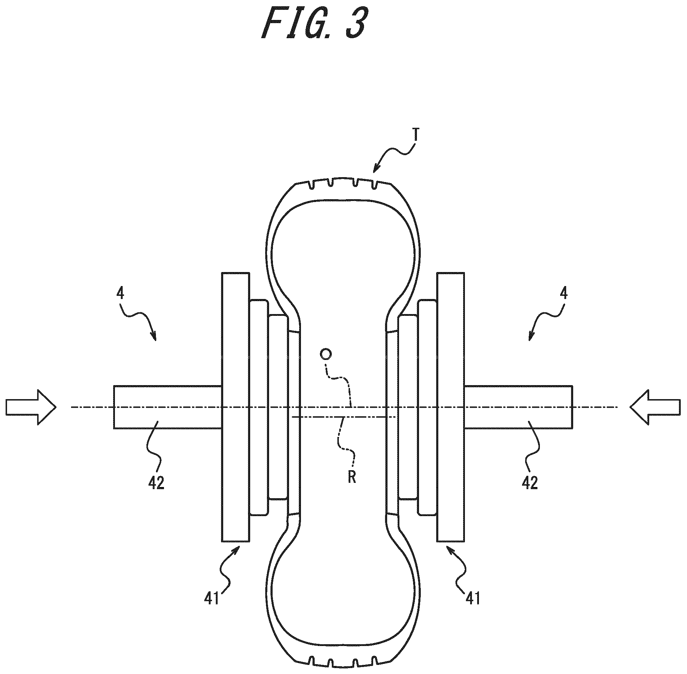

After the clamping step, as illustrated in Figure 3, the pair of split rim members 4 are brought closer together until the rim width of the pair of split rim members 4 reaches a predetermined rim width that is narrower than a prescribed rim width (Approaching step). Accordingly, the tire T is compressed in the tire width direction while maintaining contact with the pair of split rim members 4.

The approaching step is suitably achieved by the tire holding device 1 displacing the pair of split rim members 4 in the predetermined axial direction, for example, by means of a pair of telescopic parts 5 or the like.

Here, the term "rim width of the pair of split rim members 4" refers to the distance in the predetermined axial direction between the outer edges in the predetermined axial direction of the respective bead seat surfaces 41C of the bead portion holding surface 41R to which the bead portion M of the tire T is to be attached (in the example in Figures 2 to 5, the bead portion holding surface 41R which is located most inward in the predetermined axial direction), of the one or more (two in the examples in Figures 2 to 5) bead portion holding surfaces 41R that each split rim member 4 has.

Note, that it is preferable that the bead portion holding surface 41R to which the tire T is to be mounted is the one having the rim diameter of the prescribed rim or the rim diameter closest thereto, of the one or more bead portion holding surfaces 41R of the split rim member 4.

In addition, the term "prescribed rim width" refers to the rim width of the prescribed rim of the tire T.

Here, as used herein, the term "prescribed rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (In other words, the "prescribed rim" above includes sizes that could be included in the above industry standards in the future, in addition to the current sizes. An example of the "size as described in the future" could be the sizes listed as "FUTURE DEVELOPMENTS" in the ETRTO 2013 edition.). For sizes not listed in the above industry standards, the term"prescribed rim width" refers to the rim width of the rim that corresponds to the bead width of the tire.

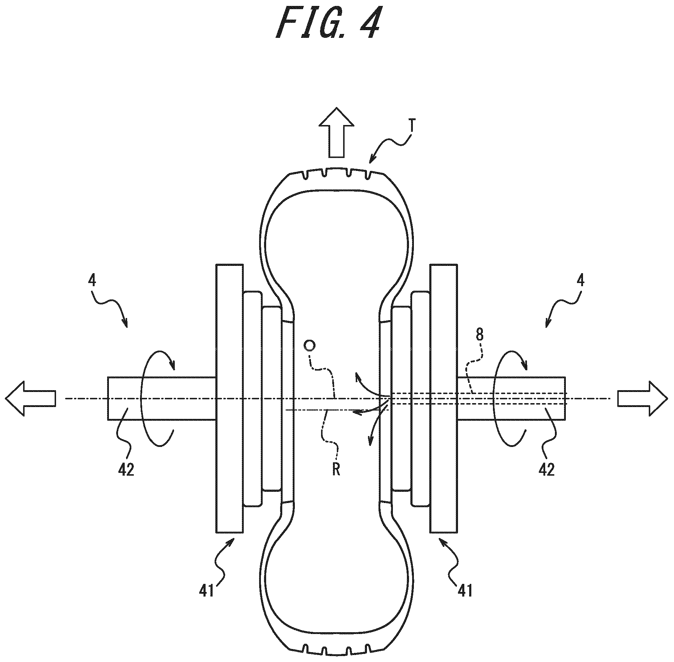

After the approaching step, as illustrated in Figure 4, each bead portion M of the tire T is mounted to the pair of split rim members 4 while rotating the pair of split rim members 4 in the same direction as each other around the predetermined axis O (Rotation step).

The rotation step is preferably achieved by the tire holding device 1 rotating the pair of split rim members 4 around the predetermined axis O.

In this embodiment, during the rotation step, air is injected into the interior of the tire T until the internal pressure of the tire T reaches a predetermined internal pressure. The injection of air into the interior of the tire T is performed via an air injection section 8. The air injection section 8 may have any configuration as long as it can inject air into the interior of the tire T. For example, it may consist of a hole through the interior of at least one of the split rim members 4, as illustrated by the dashed line in Figure 4. The air injected into the interior of the tire T may be atmospheric air or inert gas such as nitrogen gas.

In this embodiment and according to the invention, during the rotating step, the pair of split rim members 4 are gradually moved away from each other until the rim width of the pair of split rim members 4 reaches the prescribed rim width. Accordingly, the tire T gradually expands in the tire width direction while maintaining contact with the pair of split rim members 4. Note, that the action of gradually moving the pair of split rim members 4 away from each other is preferably achieved by the tire holding device 1 displacing the pair of split rim members 4 in the predetermined axial direction, for example, by means of a pair of telescopic parts 5 or the like.

During the rotation step, the tire T rotates with the pair of split rim members 4 (specifically, the pair of rim-shaped sections 41) due to friction between the tire T and the pair of split rim members 4; at the same time, the tire T gradually moves in a direction perpendicular to the predetermined axis O (upward in the example in the figure) so that the rotation axis R of the tire T approaches the center axis A of the pair of split rim members 4 (and thus, the predetermined axis O) due to the friction; eventually, as illustrated in Figure 5, the rotation axis R of the tire T is almost or completely aligned with the center axis A of the pair of split rim members 4 (and thus, the predetermined axis O); and the pair of bead portions M of the tire T rides up on the bead seat surfaces 41C of the pair of bead portion holding surfaces 41R of the pair of split rim members 4, and in turn, the tire T is mounted on the pair of bead portion holding surfaces 41R. This causes the tire T to be mounted on the pair of split rim members 4 of the tire holding device 1, in other words, the tire T is held by the pair of split rim members 4 of the tire holding device 1. That is, in the rotation step, the tire T is mounted on the pair of split rim members 4 only by the interaction between the pair of split rim members 4, without requiring any external force from the operator or others.

When the rotation step is completed, the tire mounting method of this embodiment is complete.

In this embodiment, as described above, the tire T is held by the pair of split rim members 4 when the tire T is held by the tire holding device 1, which reduces man-hours compared to, for example, using a rim member that is not split in two and consists of one component. As an alternative, the tire T could be mounted on a rim member that is not divided into two parts and consists of one component, and the rim member with the tire T mounted could be attached to a device that measures, processes, and/or tests the tire (e.g., buffing device, etc.), however, in such a case, man-hours will increase, and when the rim member is mounted on the device, the rotation axis of the device and the rotation axis of the tire may be misaligned, which may reduce the accuracy of measurement, processing, and/or testing, etc.

In addition, since the tire T is held by the pair of split rim members 4 in this embodiment, multiple types of tires with different rim widths can be held without the need to replace the pair of split rim members 4.

Furthermore, as described above, in this embodiment, a clamping step clamping a tire T between the pair of split rim members 4, and a rotating step, after the clamping step, mounting each bead portion M of the tire T to the pair of split rim members 4 while rotating the pair of split rim members 4 around the predetermined axis O are performed. By rotating the tire T around the predetermined axis O while the tire T is held by the pair of split rim members 4, the tire T can gradually move in a direction perpendicular to the predetermined axis O so that the rotation axis R of the tire T approaches the center axis A of the pair of split rim members 4 (and thus, the predetermined axis O) while being rotated. Therefore, misalignment between the center axis A of the pair of split rim members 4 (and thus, the predetermined axis O) and the rotation axis R of the tire T mounted on the pair of split rim members 4 of the tire holding device 1 can be controlled. This can improve the roundness (runout) of the tire T when the tire T is held by the pair of split rim members 4 of the tire holding device 1, which in turn can improve the accuracy of measurement, processing, testing, etc. of the tire T performed in that state.

If the tire T is mounted on the pair of split rim members 4 without the rotation step, the tire T will be mounted on the pair of split rim members 4 with the rotation axis R of the tire T shifted below the center axis A of the pair of split rim members 4 (and thus, the predetermined axis O) due to the weight of the tire T. This may result in uneven bead seating, which may deteriorate the roundness (runout) of the tire T when the tire T is held by the pair of split rim members 4 of the tire holding device 1, and thereby reduce the accuracy of measurement, processing, testing, etc. of the tire T performed in that state.

Note, that in the clamping step, as illustrated in Figure 2, it is preferable that the upper part of the inner end in the predetermined axial direction of the bead seat surface 41C on the bead portion holding surface 41R on which the bead portion M of the tire T is to be mounted (in the examples illustrated in Figures 2 to 5, the bead portion holding surface 41R located most inward in the predetermined axial direction), among one or more bead portion holding surfaces 41R of each split rim member 4, clamps (and thus contacts) the tire T. This makes it easier for the bead portion M of the tire T to be attached to the bead portion holding surface 41R during the rotation step.

In the clamping step, as illustrated in Figure 2, the portion of the tire T that is clamped by (and thus in contact with) the pair of split rim members 4 is preferably a portion of the outer surface of the bead portion M or the sidewall portion L of the tire T that extends gradually outward in the tire width direction as it moves outward in the tire radial direction. This makes it easier to clamp the tire T between the pair of split rim members 4, and also makes it easier for the bead portion M of the tire T to be attached to the bead portion holding surface 41R during the rotation step.

In the clamping step (Figure 2), it is preferable that the rim width of the pair of split rim members 4 is approximately the same as or greater than the prescribed rim width. This makes it easier for operators and others to work on the clamping step.

As described above, after the clamping step and before the rotating step, an approaching step bringing the pair of split rim members 4 closer together until the rim widths of the pair of split rim members 4 reach the predetermined rim width that is narrower than the prescribed rim width (Figure 3). The approaching step allows the pair of split rim members 4 to be closer or tighter to the tire T, which in turn allows the interior space of the tire T to be a closed space or condition close to it. This makes it easier for air to enter the tire T more reliably when subsequently inflating the tire T, thereby improving work efficiency.

From the same perspective, in the approaching step, it is preferable to bring the pair of split rim members 4 closer together until there is no gap in the tire width direction between the pair of split rim members 4 and the tire T (specifically, the bead portion M) (i.e., the two are not separated in the tire width direction and are in close contact with each other). In addition, in the approaching step, it is more preferable to bring the pair of split rim members 4 closer together until the central hole of the tire T is completely blocked by the pair of split rim members 4 (i.e., the interior space of the tire T becomes a closed space).

When performing the approaching step, as described above, during the rotating step, the pair of split rim members are gradually moved away from each other until the rim width of the pair of split rim members reaches the prescribed rim width. This further controls misalignment between the center axis A of the pair of split rim members 4 and the rotation axis R of the tire T mounted on the pair of split rim members 4.

In the rotation step (Figure 4), it is preferable that the rotational speed of the pair of split rim members 4 is 1 to 20 rpm, and 4 to 10 rpm is even preferred.

This further controls misalignment between the center axis A of the pair of split rim members 4 and the rotation axis R of the tire T mounted on the pair of split rim members 4.

From the same perspective, it is preferable that the number of times the pair of split rim members 4 rotate in the rotation step is one or two times.

In the rotation step, the rotational speed of the pair of split rim members 4 is preferably to be constant, but may vary, for example, within the above rotational speed range.

It is preferable that the pair of split rim members 4 has a rim diameter of 12 to 25 inches. When the tire T is a passenger vehicle pneumatic tire, it is more preferable that the pair of split rim members 4 has a rim diameter of 12 to 22 inches.

This makes it possible to prevent the tire holding device 1 from becoming large, and also to bring the tire T in the state mounted on the tire holding device 1 closer to the state of the tire T when it is actually used.

Note, that when the split rim member 4 has a plurality of rim diameters due to the plurality of bead portion holding surfaces 41R, as in the examples illustrated in Figures 1 to 5, it is preferable that each rim diameter of the split rim member 4 is within the above range.

As for the tire T, as described above, any pneumatic tire can be used, for example, a passenger vehicle pneumatic tire, a heavy-duty pneumatic tire, etc. can be preferably used. However, passenger vehicle pneumatic tires are more likely to achieve the effect of controlling the misalignment between the center axis A of the pair of split rim members 4 and the rotation axis R of the tire T mounted on the pair of split rim members 4.

As described above, it is preferable that during the rotation step (Figure 4), air is injected into an interior of the tire T until the internal pressure of the tire T reaches a predetermined internal pressure.

This further controls misalignment between the center axis A of the pair of split rim members 4 and the rotation axis R of the tire T mounted on the pair of split rim members 4.

The above-mentioned predetermined internal pressure is arbitrary and may be the same as or lower than the internal pressure at which the tire T is actually used.

For example, the above predetermined internal pressure is preferably from 100 to 350 kPa, and more preferably from 150 to 250 kPa. This is preferable when the tread portion K of the tire T is buffed by the buffing section 6 after the tire T is mounted on the tire holding device 1, because it makes it easier to reproduce the wear condition of the tire T after driving.

The above predetermined internal pressure may be 900 kPa or less.

It is preferable that the predetermined axis O extends in the horizontal direction as in the example of Figures 1 to 5. In this case, the tire T is mounted on the tire holding device 1 with the rotation axis R extending in the horizontal direction. This further controls misalignment between the center axis A of the pair of split rim members 4 and the rotation axis R of the tire T mounted on the pair of split rim members 4.

However, the predetermined axis O may extend in the vertical direction. In this case, the tire T is mounted on the tire holding device 1 with the rotation axis R extending in the vertical direction. Similarly in this case, by performing the rotation step after the clamping step as described above, misalignment between the center axis of the pair of split rim members and the rotation axis of the tire mounted on the pair of split rim members can be controlled.

After the tire T is mounted on the tire holding device 1 by the tire mounting method as described above, the tire T may be measured, processed, and/or tested, etc. In this case, the measurement, processing, and/or testing of the tire T may be performed using the tire holding device 1 (specifically, the measuring section 7, the processing section (e.g., buffing section 6), and/or the testing section).

For example, as an example, a tire processing method according to one embodiment of the present invention may include a mounting step mounting the tire T on the pair of split rim members 4 of the tire holding device 1 by the tire mounting method described above, and a buffing step, after the mounting step, buffing the tread portion K of the tire T by the buffing section 6 of the tire holding device 1. In the buffing step, for example, the tire holding device 1 may rotate the tire T, and buff the tread portion K of the tire T by the buffing section 6 by moving the buffing section 6 relative toward the tire T until the buffing section 6 contacts the tread portion K of the tire T. By going through the mounting step according to the tire mounting method described above, the tire T can be buffed more uniformly over its entire circumference in the buffing step. Thus, the accuracy of subsequent performance evaluation, etc. can be improved.

In the buffing step, it is preferable to buff the tread rubber of the tread portion K of the tire T by a thickness of 6 to 15 mm from the outer surface of the tire (tread surface). This allows for more appropriate testing to be performed under conditions that replicate the post-wear conditions of the tire T.

From the same perspective, in the buffing step, it is preferable to buff the tread rubber of the tread portion K of the tire T for an amount equivalent to about 3/4 of the depth of the main grooves in the tread portion K of the tire T.

From the same perspective, in the buffing step, it is suitable to buff the tread rubber of the tread portion K of the tire T until the indicators on the tread portion K of the tire T are exposed on the outer surface of the tire.

### INDUSTRIAL APPLICABILITY

The tire mounting method and the tire holding device according to the present invention are suitable, for example, when used for measuring, processing, and/or testing tires.

Any pneumatic tire can be used as the tire used in the tire mounting method, the tire processing method, and the tire holding device according to the present invention. For example, passenger vehicle pneumatic tires and heavy-duty pneumatic tires can be suitably used.

### REFERENCE SIGNS LIST

- 1: Tire holding device
- 2: Support frame
- 3: Holding mechanism
- 4: Split rim member
- 41: Rim-shaped part
- 41R: Bead portion holding surface
- 41C: Bead seat surface
- 41S: Rim flange surface
- 42: Rotation axis
- A: Center axis
- O: Predetermined axis
- 5: Telescopic part
- 6: Buffing section
- 7: Measuring section
- 8: Air injection section
- 9: Suction section
- T: Tire
- K: Tread portion
- L: Sidewall portion
- M: Bead portion
- R: Tire rotation axis
- CL: Tire equatorial plane

## Claims

1. A tire mounting method for mounting tires (T) on a tire holding device (1), wherein
the tire holding device (1) comprises a pair of split rim members (4) facing each other,
a center axis (A) of each of the pair of split rim members (4) is on a common predetermined axis (O), and
the tire mounting method includes:
a clamping step clamping a tire (T) by the pair of split rim members (4),
an approaching step, after the clamping step, bringing the pair of split rim members (4) closer together until the rim width of the pair of split rim members (4) reaches a predetermined rim width that is narrower than a prescribed rim width, and
a rotating step, after the approaching step, mounting each bead portion (M) of the tire (T) to the pair of split rim members (4) while rotating the pair of split rim members (4) around the predetermined axis,
wherein during the rotating step, the pair of split rim members (4) are gradually moved away from each other until the rim width of the pair of split rim members (4) reaches the prescribed rim width.

2. The tire mounting method according to claim 1, wherein in the rotation step, the rotational speed of the pair of split rim members (4) is 1 to 20 rpm.

3. The tire mounting method according to claim 1 or 2, wherein during the rotation step, air is injected into an interior of the tire (T) until the internal pressure of the tire (T) reaches a predetermined internal pressure.

4. The tire mounting method according to claim 3, wherein the predetermined internal pressure is 100 to 350 kPa.

5. The tire mounting method according to any one of claims 1 to 4, wherein the pair of split rim members (4) has a rim diameter of 12 to 25 inches.

6. The tire mounting method according to any one of claims 1 to 5, wherein the predetermined axis (O) extends in a horizontal direction.

7. The tire mounting method according to any one of claims 1 to 6, wherein the tire holding device (1) further comprises a buffing section (6) configured to buff a tread portion (K) of the tire (T), and is configured as a buffing device.

8. A tire processing method, wherein the method includes:
a mounting step mounting the tire (T) on the pair of split rim members (4) of the tire holding device (1) by the tire mounting method according to claim 7; and
a buffing step, after the mounting step, buffing the tread portion (K) of the tire (T) by the buffing section (6) of the tire holding device (1), and
in the buffing step, the tread portion (K) is buffed to a thickness of 6 to 15 mm.

## Patentansprüche

1. Reifenmontageverfahren zum Montieren von Reifen (T) auf einer Reifenhalterungsvorrichtung (1), wobei
die Reifenhalterungsvorrichtung (1) ein Paar einander zugewandter, geteilter Felgenelemente (4) umfasst,
die Mittelachse (A) von jedem des Paars geteilter Felgenelemente (4) auf einer gemeinsamen vorbestimmten Achse (O) vorliegt, und
das Reifenmontageverfahren Folgendes einschließt:
einen Aufspannschritt, der einen Reifen (T) durch das Paar geteilter Felgenelemente (4) aufspannt,
einen Annäherungsschritt, nach dem Aufspannschritt, der das Paar geteilter Felgenelemente (4) näher zusammenbringt, bis die Felgenbreite des Paars geteilter Felgenelemente (4) eine vorbestimmte Felgenbreite erreicht, die schmaler als eine vorgeschriebene Felgenbreite ist, und
einen Drehschritt, nach dem Annäherungsschritt, bei dem jeder Wulstabschnitt (M) des Reifens (T) auf das Paar geteilter Felgenelemente (4) montiert wird, während das Paar geteilter Felgenelemente (4) um die vorbestimmte Achse herum gedreht wird,
wobei im Laufe des Drehschritts das Paar geteilter Felgenelemente (4) allmählich voneinander wegbewegt werden, bis die Felgenbreite des Paars geteilter Felgenelemente (4) die vorgeschriebene Felgenbreite erreicht.

2. Reifenmontageverfahren nach Anspruch 1, wobei in dem Drehschritt die Drehzahl des Paares geteilter Felgenelemente (4) 1 bis 20 U/min beträgt.

3. Reifenmontageverfahren nach Anspruch 1 oder 2, wobei im Laufe des Drehschritts Luft in ein Inneres des Reifens (T) injiziert wird, bis der Innendruck des Reifens (T) einen vorbestimmten Innendruck erreicht.

4. Reifenmontageverfahren nach Anspruch 3, wobei der vorbestimmte Innendruck 100 bis 350 kPa beträgt.

5. Reifenmontageverfahren nach einem der Ansprüche 1 bis 4, wobei das Paar geteilter Felgenelemente (4) einen Felgendurchmesser von 12 bis 25 Zoll aufweist.

6. Reifenmontageverfahren nach einem der Ansprüche 1 bis 5, wobei sich die vorbestimmte Achse (O) in einer horizontalen Richtung erstreckt.

7. Reifenmontageverfahren nach einem der Ansprüche 1 bis 6, wobei die Reifenhalterungsvorrichtung (1) weiter einen Polierbereich (6) umfasst, der zum Polieren eines Laufflächenabschnitts (K) des Reifens (T) konfiguriert ist, und als eine Poliervorrichtung konfiguriert ist.

8. Reifenbearbeitungsverfahren, wobei das Verfahren Folgendes einschließt:
einen Montageschritt, bei dem der Reifen (T) durch das Reifenmontageverfahren nach Anspruch 7 auf das Paar geteilter Felgenelemente (4) der Reifenhalterungsvorrichtung (1) montiert wird; und
einen Polierschritt nach dem Montageschritt, bei dem der Laufflächenabschnitt (K) des Reifens (T) durch den Polierbereich (6) der Reifenhalterungsvorrichtung (1) poliert wird, und
bei dem Polierschritt der Laufflächenabschnitt (K) auf eine Dicke von 6 bis 15 mm poliert wird.

## Revendications

1. Procédé de montage de pneus pour monter des pneus (T) sur un dispositif de maintien de pneus (1), dans lequel
le dispositif de maintien de pneus (1) comprend une paire d'éléments de jante fendue (4) se faisant face,
un axe central (A) de chacune de la paire d'éléments de jante fendue (4) est sur un axe prédéterminé commun (O), et
le procédé de montage de pneus inclut :
une étape de serrage consistant à serrer un pneu (T) par la paire d'éléments de jante fendue (4),
une étape d'approche, après l'étape de serrage, consistant à rapprocher la paire d'éléments de jante fendue (4) jusqu'à ce que la largeur de jante de la paire d'éléments de jante fendue (4) atteigne une largeur de jante prédéterminée qui est plus étroite qu'une largeur de jante prescrite, et
une étape de rotation, après l'étape d'approche, consistant à monter chaque portion de talon (M) du pneu (T) sur la paire d'éléments de jante fendue (4) tout en faisant tourner la paire d'éléments de jante fendue (4) autour de l'axe prédéterminé,
dans lequel, pendant l'étape de rotation, la paire d'éléments de jante fendue (4) est progressivement éloignée l'une de l'autre jusqu'à ce que la largeur de jante de la paire d'éléments de jante fendue (4) atteigne la largeur de jante prescrite.

2. Procédé de montage de pneus selon la revendication 1, dans lequel, lors de l'étape de rotation, la vitesse de rotation de la paire d'éléments de jante fendue (4) est de 1 à 20 tr/min.

3. Procédé de montage de pneus selon la revendication 1 ou 2, dans lequel, pendant l'étape de rotation, de l'air est injecté à l'intérieur du pneu (T) jusqu'à ce que la pression interne du pneu (T) atteigne une pression interne prédéterminée.

4. Procédé de montage de pneus selon la revendication 3, dans lequel la pression interne prédéterminée est de 100 à 350 kPa.

5. Procédé de montage de pneus selon l'une quelconque des revendications 1 à 4, dans lequel la paire d'éléments de jante fendue (4) présente un diamètre de jante de 12 à 25 pouces.

6. Procédé de montage de pneus selon l'une quelconque des revendications 1 à 5, dans lequel l'axe prédéterminé (O) s'étend dans une direction horizontale.

7. Procédé de montage de pneus selon l'une quelconque des revendications 1 à 6, dans lequel le dispositif de maintien de pneus (1) comprend en outre une section de polissage (6) configurée pour polir une partie de bande de roulement (K) du pneu (T), et est configuré comme un dispositif de polissage.

8. Procédé de traitement de pneus, dans lequel le procédé inclut :
une étape de montage consistant à monter le pneu (T) sur la paire d'éléments de jante fendue (4) du dispositif de maintien de pneus (1) par le procédé de montage de pneus selon la revendication 7 ; et
une étape de polissage, après l'étape de montage, consistant à polir la partie de bande de roulement (K) du pneu (T) par la section de polissage (6) du dispositif de maintien de pneus (1), et
lors de l'étape de polissage, la partie de bande de roulement (K) est polie jusqu'à une épaisseur de 6 à 15 mm.
